# EUROPÄISCHE PATENTSCHRIFT

(11) **EP 3 466 750 B1**
(45) Veröffentlichungstag und Bekanntmachung des Hinweises auf die Patenterteilung: **17.02.2021**
(21) Anmeldenummer: 18198799.1
(22) Anmeldetag: 05.10.2018
(51) Int. Cl.: B60L 53/14, B60L 53/10, B60L 53/53

(54) **GALVANISCHE TRENNUNG IN DER LEISTUNGSELEKTRONIK IN EINER LADESTATION BZW. STROMTANKSTELLE**
GALVANIC SEPARATION IN POWER ELECTRONICS IN A CHARGING STATION OR ELECTRICITY CHARGING POINT
SÉPARATION GALVANIQUE DANS L'ÉLECTRONIQUE DE PUISSANCE DANS UNE STATION DE CHARGE OU STATION DE RECHARGE

(30) Priorität: 06.10.2017 DE 102017217758
(43) Veröffentlichungstag der Anmeldung: 10.04.2019
(73) Patentinhaber: Dr. Ing. h.c. F. Porsche AG, 70435 Stuttgart (DE); ads-tec GmbH, 72622 Nürtingen (DE)
(72) Erfinder: HEYNE, Dr. Raoul, 75446 Wiernsheim (DE); JOSLOWSKI, Florian, 70771 Leinfelden-Echterdingen (DE); KIEFER, Michael, 70563 Stuttgart (DE); SPEIDEL, Thomas, 71706 Markgröningen (DE); NATOUR, Ali, 73269 Hochdorf (DE)
(74) Vertreter: Sturm, Christoph

(56) Entgegenhaltungen:
- WO-A1-2013/039753
- WO-A1-2013/159821
- DE-A1-102012 212 291
- DE-A1-102015 110 023
- DE-A1-102016 103 011
- DE-A1-102017 208 360
- US-A1- 2016 121 735

## Beschreibung

Die vorliegende Erfindung betrifft eine Ladestation einer Stromtankstelle und eine Stromtankstelle.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen.

Bekannt sind hier insbesondere Gleichstrom-Schnellladesysteme (*high performance charging,* HPC) wie das in Europa verbreitete, sogenannte kombinierte Ladesystem (*combined charging system,* CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an z.B. Solartankstellen bereitgestellt. Im Fahrzeug befindet sich ein Batteriemanagementsystem, das mit der Ladesäule direkt oder indirekt kommuniziert, um die Stromstärke anzupassen oder bei Erreichung einer Kapazitätsgrenze den Vorgang zu beenden.

Die Leistungselektronik befindet sich hierbei üblicherweise in der Ladesäule. Da die Gleichstromanschlüsse der Ladesäule direkt mit entsprechenden Anschlüssen der Traktionsbatterie verbunden werden, lassen sich verlustarm hohe Ladeströme übertragen, was kurze Ladezeiten ermöglicht.

In den verschiedenen Ladestationen, die weltweit im Einsatz sind, werden die verschiedensten Topologien für die Leistungselektronik verwendet. Staatliche Sicherheitsnormen wie DIN EN 61851-23 fordern dabei mitunter eine galvanische Trennung der Ladesäulen. Diese galvanische Trennung kann in den verschiedenen Ladesäulen auf ganz verschiedene Weisen z. B. durch einen separaten Transformator und auch innerhalb verschiedener Umrichter wie z. B. einem AC/DC-Gleichrichter mit Transformator vorgenommen werden. Wünschenswert ist eine sehr kleine Bauform zur galvanischen Trennung, die wenig Platz kostet und wenig Masse hat.

Die meisten heutigen Ladesäulen realisieren eine galvanische Trennung am Eingangswandler, dem AC/DC-Wandler mit integriertem oder vorgeschaltetem Transformator. Andere stellen die galvanische Trennung auch in einem DC/DC-Wandler her. Dazu werden meist ausgangsseitige DC/DC-Wandler verwendet, welche allerdings durch hohe Leistungen sehr teuer werden. Weitere Lösungen sehen vor, die galvanische Trennung vom Transformator beim Netzanschluss zu benutzen. Auch ist es möglich, dass AC-seitig ein zusätzlicher, separater Transformator hinzugefügt wird.

DE 10 2014 013039 A1, US 2013/162032 A, US 2013/175990 A und US 2015/375628 A offenbaren jeweils eine Ladesäule für ein Elektrofahrzeug mit platzsparender Konstruktion und galvanischer Trennung, wozu teilweise ein DC/DC-Wandler vorgesehen ist.

Die Ladesäulen gemäß US 2013 175990 A und US 2015 375628 A enthalten je mehrere Wandler, unter denen ein AC/DC-Wandler ist.

DE 10 2016 103011 A1, DE 10 2012 212291 A1, US 2016/121735 A1, WO 2013/039753 A1 und DE 10 2017 208360 A1 offenbaren weiteren Stand der Technik.

### Offenbarung der Erfindung

Die Erfindung stellt eine Ladestation einer Stromtankstelle nach Anspruch 1 sowie eine Stromtankstelle nach Anspruch 5 bereit.

Technisch umgesetzt wird die galvanische Trennung in einem DC/DC-Steller mit hoher Taktfrequenz direkt nach dem netzseitig vorgesehenen AC/DC-Steller. An dieser Position ist nur die vergleichsweise geringe Netzleistung zu übertragen, weshalb sie sich für eine galvanische Trennung anbietet, die sehr platzsparend und effizient vorgenommen werden soll. Dies ist die Hauptzielsetzung für die hier vorgeschlagene Maßnahme zur galvanischen Trennung, die angesichts der geringen Bauraumanforderungen auch leicht und günstig realisiert werden kann.

Weitere vorteilhafte Ausgestaltungen der Erfindung sind in den abhängigen Patentansprüchen angegeben. So ist eine Realisierung als Reihen- oder Serienresonanzwandler sinnvoll, deren Größen angesichts der hohen Taktfrequenz minimiert werden und die einen größtmöglichen Wirkungsgrad aufweisen. In dieser Anordnung ist die galvanische Trennung besonders platzsparend und günstig möglich.

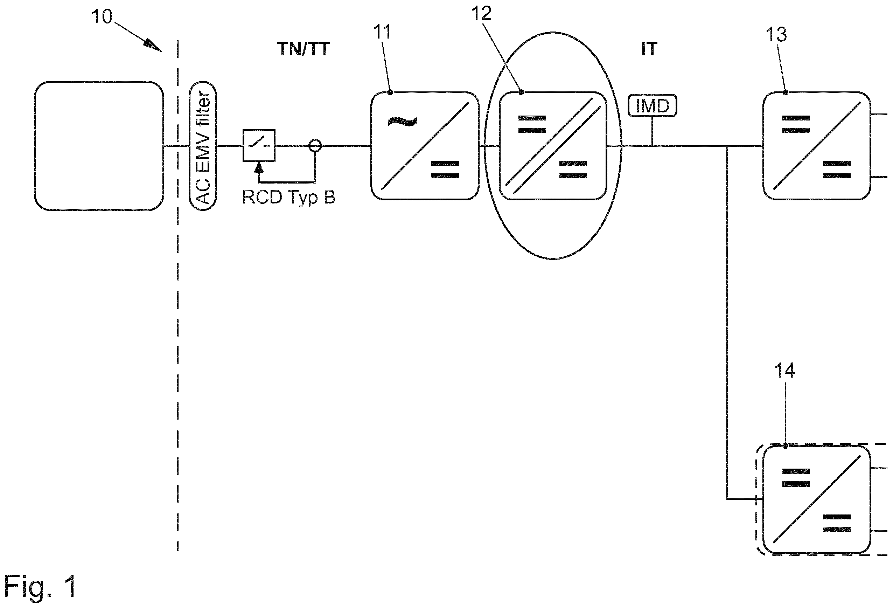

### Kurze Beschreibung der Zeichnung

Ein Ausführungsbeispiel der Erfindung ist in der Zeichnung dargestellt und wird im Folgenden näher beschrieben.

Die einzige Figur zeigt eine erfindungsgemäße Umrichter-Konstellation.

### Ausführungsformen der Erfindung

Die Abbildung illustriert exemplarisch eine mit einer erfindungsgemäßen Ladestation (10) ausgestattete Stromtankstelle. Ein Gleichrichter (*AC*/*DC converter* 11) dient hierbei zum Anschluss an das öffentliche TN- oder TT-Niederspannungsnetz. Ein mit besagtem Gleichrichter (11) verbundener, galvanisch trennender DC-DC-Steller oder Gleichspannungswandler (*isolated DC*/*DC converter* 12) überführt die Spannung zum Schutz vor Erdschlussfehlern gemäß etwaiger gesetzlicher Vorgaben in das interne IT-Netz der Ladestation (10). Hierzu ist der Wandler (12) zum Betrieb mit möglichst hoher Taktfrequenz (fachsprachlich: "hochtaktend") ausgelegt. Die hohe Taktfrequenz beträgt vorzugsweise zwischen 30kHz und 120kHz, insbesondere zwischen 80kHz und 120kHz.

An dieser Stelle trennen sich innerhalb der Ladestation (10) im Wesentlichen zwei Leistungspfade: Ein erster Gleichstromsteller (13) speist eine angeschlossene Batterie (nicht dargestellt) und erlaubt die Rückspeisung der solchermaßen gespeicherten Energie zum beschleunigten Laden angeschlossener Fahrzeuge. Für deren Versorgung sind ein zweiter Gleichstromsteller (14) mit nachgeschaltetem DC-EMV-Filter (15) und ein - vorzugsweise im Lückbetrieb (*discontinuous current mode, discontinuous conduction mode,* DCM) betriebener - zweiter Gleichspannungswandler vorgesehen, die über geeignet geschützte Anschlussleitungen zur Leistungsübertragung verfügen. Je nach Ladestandard und -spannung kann die zugehörige Pilotleitung mit einem Überspannungsschutz versehen sein.

Ein Batterie umfasst vorzugsweise zwei Stränge (21, 22). Jeder Strang (21, 22) der Batterie umfasst jeweils mehrere Batteriemodule und jedes Batteriemodul des jeweiligen Strangs (21, 22) umfasst mehrere Batteriezellen. In jedem Batteriemodul sind die Batteriezellen des jeweiligen Batteriemoduls in Reihe geschaltet. In jedem Strang (21, 22) sind die Batteriemodule des jeweiligen Strangs (21, 22) in Reihe geschaltet. Die Stränge (21, 22) der Batterie können parallel geschaltet sein oder unabhängig betrieben werden. Wirken beide Stränge (21, 22) mit einer gemeinsamen Leistungselektronik oder zusammengeschalteten Leistungselektroniken zusammen, so sind die Stränge (21, 22) der Batterie parallel geschaltet. Wirkt jeder der Stränge (21, 22) mit einer individuellen Leistungselektronik zusammen, so sind die Stränge (21, 22) der Batterie nicht parallel geschaltet sondern werden unabhängig betrieben.

## Patentansprüche

1. Ladestation (10) einer Stromtankstelle, mit den folgenden Merkmalen:
- einen Gleichrichter (11) zum Anschließen der Ladestation (10) an ein öffentliches Niederspannungsnetz, und
- einen mit dem Gleichrichter (11) verbundenen, galvanisch trennenden Gleichspannungswandler (12) mit einer hohen Taktfrequenz, **gekennzeichnet durch** die folgenden Merkmale:
- einen mit dem Gleichspannungswandler (12) verbundenen ersten Gleichstromsteller (13) eines ersten Leistungspfads zum Anschließen einer Batterie an die Ladestation (10) und für die Rückspeisung gespeicherter Energie zum beschleunigten Laden eines Elektroautos,
- einen mit dem Gleichspannungswandler (12) verbundenen zweiten Gleichstromsteller (14) eines zweiten Leistungspfads zum Anschließen eines Elektroautos an die Ladestation (10).

2. Ladestation (10) nach Anspruch 1,
**gekennzeichnet durch** folgendes Merkmal:
- der Gleichspannungswandler (12) ist ein Reihen- oder Serienresonanzwandler.

3. Ladestation (10) nach Anspruch 1 oder 2,
**gekennzeichnet durch** folgendes Merkmal:
- die hohe Taktfrequenz beträgt zwischen 30kHz und 120kHz.

4. Ladestation (10) nach Anspruch 3,
**gekennzeichnet durch** folgendes Merkmal:
- die hohe Taktfrequenz beträgt zwischen 80kHz und 120kHz.

5. Stromtankstelle,
**gekennzeichnet durch** folgendes Merkmal:
- eine Ladestation (10) nach einem der Ansprüche 1 bis 4.

6. Stromtankstelle nach Anspruch 5,
**gekennzeichnet durch** folgendes Merkmal:
- eine an den ersten Gleichstromsteller (13) angeschlossene Batterie.

7. Stromtankstelle nach Anspruch 6,
**gekennzeichnet durch** folgendes Merkmal:
- die Batterie umfasst mehrere Stränge.

## Claims

1. Charging station (10) for an electricity charging point,
having the following features:
- a rectifier (11) for connecting the charging station (10) to a public low-voltage grid, and
- a galvanically isolating DC voltage converter (12) having a high clock frequency and connected to the rectifier (11), **characterized by** the following features:
- a first DC chopper (13), connected to the DC voltage converter (12), of a first power path for connecting a battery to the charging station (10) and for feeding back stored energy for accelerated charging of an electric automobile,
- a second DC chopper (14), connected to the DC voltage converter (12), of a second power path for connecting an electric automobile to the charging station (10) .

2. Charging station (10) according to Claim 1,
**characterized by** the following feature:
- the DC voltage converter (12) is a series resonant converter.

3. Charging station (10) according to Claim 1 or 2,
**characterized by** the following feature:
- the high clock frequency is between 30 kHz and 120 kHz.

4. Charging station (10) according to Claim 3,
**characterized by** the following feature:
- the high clock frequency is between 80 kHz and 120 kHz.

5. Electricity charging point,
**characterized by** the following feature:
- a charging station (10) according to one of Claims 1 to 4.

6. Electricity charging point according to Claim 5,
**characterized by** the following feature:
- a battery connected to the first DC chopper (13).

7. Electricity charging point according to Claim 6,
**characterized by** the following feature:
- the battery comprises a plurality of strings.

## Revendications

1. Station de charge (10) d'un poste de recharge électrique, présentant les caractéristiques suivantes :
- un redresseur (11) permettant de raccorder la station de charge (10) à un réseau public basse tension, et
- un convertisseur de tension continue (12) assurant une séparation galvanique, relié au redresseur (11) et présentant une fréquence d'horloge élevée, **caractérisé par** les caractéristiques suivantes :
- un premier hacheur à courant continu (13) d'un premier trajet de puissance relié au convertisseur de tension continue (12) pour raccorder une batterie à la station de charge (10) et pour réinjecter de l'énergie accumulée pour la charge accélérée d'une voiture électrique,
- un deuxième hacheur à courant continu (14) d'un deuxième trajet de puissance relié au convertisseur de tension continue (12) pour raccorder une voiture électrique à la station de charge (10).

2. Station de charge (10) selon la revendication 1, **caractérisée par** la caractéristique suivante :
- le convertisseur de tension continue (12) est un convertisseur à résonance en série ou sériel.

3. Station de charge (10) selon la revendication 1 ou 2, **caractérisée par** la caractéristique suivante :
- la fréquence d'horloge élevée est comprise entre 30kHz et 120kHz.

4. Station de charge (10) selon la revendication 3, **caractérisée par** la caractéristique suivante :
- la fréquence d'horloge élevée est comprise entre 80kHz et 120kHz.

5. Poste de recharge électrique, **caractérisé par** la caractéristique suivante :
- une station de charge (10) selon l'une des revendications 1 à 4.

6. Poste de recharge électrique selon la revendication 5, **caractérisé par** la caractéristique suivante :
- une batterie raccordée au premier hacheur à courant continu (13).

7. Poste de recharge selon la revendication 6, **caractérisé par** la caractéristique suivante :
- la batterie comprend plusieurs lignes d'éléments.
